# EUROPÄISCHE PATENTSCHRIFT

(11) **EP 4 405 152 B1**
(45) Veröffentlichungstag und Bekanntmachung des Hinweises auf die Patenterteilung: **30.09.2026**
(21) Anmeldenummer: 22802183.8
(22) Anmeldetag: 20.10.2022
(51) Int. Cl.: B29B 9/12, B29B 9/16, B29B 9/06, B29B 13/06, C08G 63/00, C08G 63/88, F26B 5/08

(54) **VERFAHREN UND VORRICHTUNG ZUM VERARBEITEN VON PET-POLYMEREN ZU PELLETS**
METHOD AND DEVICE FOR PROCESSING PET POLYMERS IN ORDER TO FORM PELLETS
PROCÉDÉ ET DISPOSITIF DE TRAITEMENT DE POLYMÈRES PET POUR FORMER DES PASTILLES

(30) Priorität: 16.12.2021 DE 102021133419
(43) Veröffentlichungstag der Anmeldung: 31.07.2024
(73) Patentinhaber: Maag Germany GmbH, 63762 Großostheim (DE)
(72) Erfinder: GLÖCKNER, Frank, 63739 Aschaffenburg (DE); ELOO, Michael, 46509 Xanten (DE); VELTEL, Jürgen, 47626 Kevelaer (DE); WILHELMI, Stephan Dietmer, 5970 Ærøskøbing (DK)
(74) Vertreter: Lorenz Seidler Gossel Part. mbB
(86) Internationale Anmeldenummer: PCT/EP2022/079263
(87) Internationale Veröffentlichungsnummer: WO 2023/110196

(56) Entgegenhaltungen:
- EP-A1- 2 433 771
- EP-A1- 2 712 881
- EP-A1- 3 363 841
- DE-A1- 102014 110 337
- DE-A1- 102020 203 563
- DE-A1- 4 223 197
- US-A1- 2012 077 951

## Beschreibung

Die vorliegende Erfindung betrifft allgemein Granulate und Pellets aus Polymeren wie PET-Pellets. Die Erfindung betrifft dabei einerseits ein Verfahren zum Verarbeiten von PET-Polymeren zu PET-Pellets, bei dem PET-Schmelze in einem Unterwassergranulator zu PET-Pellets granuliert wird, die im Gemisch mit Prozesswasser über eine Abflussleitung von dem Unterwassergranulator einem Trockner zugeführt und vom Trockner an eine Nachbehandlungsstation gegeben werden, wobei das Prozesswasser zum Erzeugen einer golfballartigen Oberflächenstruktur an den PET-Pellets mit einer Temperatur unter der Glasübergangstemperatur des verwendeten PET-Polymers gefahren wird. Die Erfindung betrifft andererseits eine Vorrichtung zum Verarbeiten von PET-Polymeren zu PET-Pellets, umfassend einen Unterwassergranulierer, einen Trockner sowie eine Nachbehandlungsstation zum Nachbehandeln der getrockneten Pellets.

Um Plastikpellets wie PET-Pellets herzustellen, werden seit geraumer Zeit Unterwassergranulierer eingesetzt, die aus einer Lochplatte austretende Schmelzestränge in einer mit Prozesswasser befüllten Schneid- bzw. Granulierkammer mittels eines darin rotierenden Messerkopfes zu Pellets zerteilen. Die Polymerschmelze wird mittels eines Extruders oder einem anderen geeigneten Zuförderer mit einer Temperatur oberhalb der Schmelzetemperatur durch die Lochplatte gedrückt, so dass Polymerschmelzestränge in die mit Prozesswasser befüllte Granulierkammer gelangen, in der sie dann vom Messerkopf zerteilt werden, wobei die Granulierkammer vom Prozesswasser durchspült wird, so dass über eine Abflussleitung ein Granulat-Prozesswasser-Gemisch aus der Granulierkammer abgeleitet und in den Trockner gefördert wird, der ein Zentrifugaltrockner sein kann und das Prozesswasser von den Pellets trennt. Das separierte Prozesswasser wird üblicherweise zur Granulierkammer zurückgeführt, so dass sich ein Kreislauf ergibt. Weitere Ansätze zur Behandlung der Pellets sind aus den Schriften EP 2 712 881 A1, EP 3 363 841 A1, EP 2 433 771 A1, US 2012/077951 A1, DE 42 23 197 A1, DE 10 2014 110 337 A1 und DE 10 2020 203 563 A1 bekannt.

Die im Trockner getrockneten Pellets sind dabei üblicherweise noch nicht fertig, sondern werden einer Nachbehandlung unterzogen, um die gewünschten Pelleteigenschaften zu erzielen. Einerseits sind die aus dem Unterwassergranulierer kommenden Pellets üblicherweise amorph und damit an der Oberfläche relativ klebrig, so dass sie einer Kristallisation unterworfen werden, was die Klebrigkeit reduziert und die weitere Handhabung erleichtert. Die Kristallisation der Pellets kann durch Wärmezufuhr nach dem Trockner bewerkstelligt oder unterstützt werden, oder auch im Wege einer Selbstkristallisation erfolgen, wenn die Pellets noch genügend Eigenwärme besitzen, was beispielsweise dadurch unterstützt werden kann, dass in die Abflussleitung zwischen Unterwassergranulierer und Trockner Druckgas, insbesondere ein reaktionsträges Inertgas eingespritzt wird, so dass sich ein Pellet-Gas-Prozesswasser-Gemisch bildet und das relativ kalte Prozesswasser den Pellets weniger Wärme entziehen kann, vgl. beispielsweise EP 16 84 961 B1.

Andererseits ist es jedoch erwünscht, die PET-Pellets durch kaltes Prozesswasser sozusagen einzufrieren, um die Reaktivität der Pellets für die Nachbehandlungsschritte zu verbessern. Hierzu kann das Prozesswasser mit einer Temperatur unter der Glasübergangstemperatur T_{g} der jeweils verwendeten PET-Polymerzusammensetzung gefahren werden, um eine golfballartige, entsprechend raue Oberflächenstruktur an den Pellets zu erzeugen, die deren Oberfläche vergrößert und letztlich zu einer höheren Reaktivität führt und auch die Dekontaminationseigenschaften verbessert, um unerwünschte Inhaltsstoffe bzw. Nebenprodukte über die Oberfläche aus den Pellets ausscheiden zu können. Eine große Oberfläche hilft dabei, den Diffusionsgradienten der Pellets zur Pelletoberfläche, die mit dem Inertgas wie beispielsweise N₂ oder CO₂ oder dann auch Luft in Berührung kommt, zu verbessern. Die Reaktivität der Pellets ist insbesondere von Bedeutung, um bei Nachbehandlungsprozessen wie beispielsweise einer Dealdehydisierung und einer Festkörperpolykondensation gute Ergebnisse zu erzielen. Außerdem verringert durch das Abschrecken der Pellets durch unterkühltes Prozesswasser das Herauslösen von Acetaldehyd und anderen Nebenprodukten aus den Pellets. Diese Nebenprodukte insbesondere Acetaldehyd, verändern negativ durch Wärme und Luftsauerstoffeinwirkung den ph-Wert (sauer) des Prozesswassers, sodass der Verschleiß an Lochplatte und Messern signifikant negative beeinflusst, sowie auch andere prozesswasserberührende teile einen merklich höheren Verschleiß aufweisen.

Die durch das Abschrecken erzeugte Golfballstruktur an der Oberfläche der Pellets hilft dabei nicht nur die Oberfläche zu vergrößern und die Reaktivität zu verbessern, sondern verringert auch flächigen Kontakt bzw. die Kontaktfläche einander berührender Pellets und wirkt somit der Tendenz entgegen, dass die klebrigen Pellets zusammenbacken.

Andererseits kann ein zu starkes Abschrecken der Pellets nicht nur eine Kristallisation der Pellets im Wege der Selbstkristallisation verhindern oder zumindest beeinträchtigen, sondern auch eine gleichmäßige Kristallisierung der Pellets mit einem hohen Kristallitgehalt verteilt über die ganzen Pellets verhindern. Dabei lässt sich den zu stark abgeschreckten und dann im Trockner abgetrockneten Pellets die für die Kristallisation benötigte Wärme nur mehr schwer zuführen, und zwar insbesondere auch was die Gleichmäßigkeit der Wärmeverteilung im Granulatquerschnitt angeht, da sich beispielsweise nachträglich von außen zugeführte Wärme nur langsam bis in den Kern der Pellets vorarbeiten kann. Die Pellets sind insofern hinsichtlich der Kristallisation sehr empfindlich, was die Pellettemperatur und die Wärmeverteilung im Pellet angeht. Dabei wird die Kristallisation nicht nur durch zu starke Wärmeabfuhr, sondern auch durch übermäßige Wärmezufuhr beeinträchtigt.

Hiervon ausgehend liegt der vorliegenden Erfindung die Aufgabe zugrunde, ein verbessertes Verfahren und eine verbesserte Vorrichtung der genannten Art für die Verarbeitung von PET-Polymeren zu PET-Pellets zu schaffen, die Nachteile des Standes der Technik vermeiden und Letzteren in vorteilhafter Weise weiterbilden. Insbesondere sollen Pellets mit einer hohen Reaktivität und guten Dekontaminationseigenschaften geschaffen werden, die gleichermaßen geeignet sind, eine gleichmäßige Kristallisierung mit hohem Kristallitgehalt zu erreichen.

Erfindungsgemäß wird die genannte Aufgabe durch ein Verfahren gemäß Anspruch 1 sowie eine Vorrichtung gemäß Anspruch 15 gelöst. Bevorzugte Ausgestaltungen der Erfindung sind Gegenstand der abhängigen Ansprüche.

Es wird also vorgeschlagen, die Pellets durch kaltes Prozesswasser unter der Glasübergangstemperatur der jeweils verwendeten Polymerzusammensetzung zwar stark abzuschrecken, die Verweilzeit im Prozesswasser jedoch so stark zu verkürzen, dass die starke Abschreckung nur an der Oberfläche der Pellets auftritt und in der gewünschten Weise dort eine golfballartige Oberflächenstruktur mit hoher Rauigkeit ausgebildet wird. Die solchermaßen für die Nachbehandlung vorbereiteten Pellets werden nach dem Trocknen im Trockner dann einem zweistufigen Nachbehandlungsprozess unterzogen, in dem in einem ersten Nachbehandlungsschritt eine starke Nukleusbildung bei nur schwach erhöhter Temperatur über kürzere Behandlungszeit in Gang gesetzt wird und dann in einem zweiten Nachbehandlungsschritt bei stärker erhöhter Temperatur über längere Zeit das angestrebte Nachbehandlungsergebnis erzielt wird.

Erfindungsgemäß ist vorgesehen, dass die Pellets binnen einer Sekunde oder weniger vom kalten, unter der Glasübergangstemperatur des verwendeten Polymermaterials temperierten Prozesswasser getrennt und nach dem Trockner einer zumindest zweistufigen Nachbehandlung unterzogen werden, wobei die Pellets in einem ersten Nachbehandlungsraum zur Nukleusbildung mit gleichmäßig warmgehaltenem Gas einer ersten Temperatur, die höher als die Oberflächentemperatur der Pellets ist, für eine erste Zeitspanne beaufschlagt sowie in einem zweiten Nachbehandlungsraum zur Kristallisation mit einer zweiten Temperatur, die höher als die erste Temperatur ist, über eine zweite Zeitspanne, die ein Vielfaches der ersten Zeitspanne beträgt, behandelt werden.

Durch den zweistufigen Nachbehandlungsprozess in unterschiedlich temperierten Nachbehandlungsräumen über unterschiedliche Zeitspannen kann die Nukleusbildung in den Pellets befördert werden, was dann letztlich eine gleichmäßigere Kristallisation mit erhöhten Kristallitgehalten ermöglicht. In den ersten Nachbehandlungsraum mit nur sanft über die Oberflächentemperatur erhöhten Gastemperatur und relativ kurzer Behandlungsdauer kann sich der Nukleus in den Pellets ungestört ausbilden, ohne dass unerwünscht hohe Temperaturgradienten im Pellet die Nukleusbildung beeinträchtigen würden. Die temperierte Gasbeaufschlagung sorgt für eine vergleichmäßigte, sanfte Nestwärme, die die Nukleusbildung ohne übermäßige Zufuhr oder Abfuhr von Wärme begünstigt. Im zweiten Nachbehandlungsschritt wird dann das Nukleuswachstum weiter befördert und die Kristallisation in Gang gesetzt bzw. fortgesetzt. Die Menge bzw. Größe des Nukleus bestimmt letztlich die Menge und Dichte und Größe der Kristallite in den PET-Pellets, so dass insbesondere eine gleichmäßigere Kristallisation der Pellets mit hohen Kristallitgehalten erzielt werden kann.

In vorteilhafter Weiterbildung der Erfindung können die Pellets in noch deutlich kürzeren Verweilzeiten von deutlich weniger als einer Sekunde vom unterkühlten Prozesswasser des Unterwassergranulierers getrennt werden. Vorteilhafterweise können Verweilzeiten der granulierten Pellets im Prozesswasser von weniger als 0,5 Sekunden oder auch weniger als 0,3 Sekunden oder sogar weniger als 0,1 Sekunden vorgesehen werden. Um solchermaßen kurze Verweilzeiten im unterkühlten Prozesswasser zu erzielen, kann mit sehr hohen Strömungsgeschwindigkeiten des Prozesswassers in der Granulierkammer und/oder in der Abflussleitung gearbeitet und/oder eine sehr kurze Abflussleitung zwischen Unterwassergranulierer und Trockner vorgesehen werden.

Beispielsweise kann die Abflussleitung vom Unterwassergranulierer zum Trockner eine Länge von weniger als drei Metern oder von weniger als einem Meter oder weniger als einem halben Meter aufweisen und/oder möglichst geradeaus gebildet sein, beispielsweise nur einen oder zwei oder auch gar keinen Kurvenabschnitt besitzen. Alternativ oder zusätzlich zu einer verkürzten Abflussleitung kann die Prozesswassergeschwindigkeit durch ausreichend hoch gewählte Fördermengen und/oder ausreichend hohe Verhältnisse zwischen Fördermenge und Leitungsquerschnitt erreicht werden.

Insbesondere kann eine hohe Prozesswassergeschwindigkeit bzw. eine sehr niedrige Verweilzeit der Pellets im Prozesswasser auch durch Maßnahmen im Bereich der Granulierkammer erreicht bzw. unterstützt werden. Insbesondere kann die Verweilzeit in der Granulierkammer selbst signifikant dadurch verringert werden, dass der Prozesswasserzulauf in die Granulierkammer und/oder der Prozesswasserablauf aus der Granulierkammer, d.h. der Ablauf für das Pellet-Prozesswasser-Gemisch tangential in die bzw. aus der Prozesskammer geführt ist, bzw. zumindest näherungsweise tangential an der bzw. von der Umfangsfläche einer etwa zylindrischen Granulierkammer zu bzw. abgeführt wird. Die Prozesswasser-zu- und -abläufe können dabei auch so an der Umfangsseite der Granulierkammer verteilt angeordnet sein, dass die Umfangsstrecke vom Zulauf zum Ablauf weniger als 180° oder weniger als 120° beträgt, beispielsweise kann der Ablauf 90° nach dem Zulauf angeordnet sein. Hierdurch kann das sich in der Granulierkammer bildende Granulat-Prozesswasser-Gemisch rasch ausgeschwemmt werden und dementsprechend die Verweilzeit verkürzt werden.

Alternativ oder zusätzlich kann in der Granulierkammer ein Pumpenrad vorgesehen sein, beispielsweise an dem Messerkopf ausgebildet sein, um in der Granulierkammer die Abfuhr des Pellet-Prozesswassergemischs zu vergleichmäßigen und weiter befördern.

Durch die sehr kurzen Verweilzeiten im Prozesswasser kann mit stärker unterkühltem Prozesswasser gearbeitet werden. Das Prozesswasser kann insbesondere deutlich unter der Glasübergangstemperatur gefahren werden, beispielsweise in einem Temperaturbereich von 40° bis 80° oder 45° bis 75° oder 50° bis 70° oder 50° bis 60°. Hierdurch kommt es zu einer starken Abschreckung, die jedoch auf die Oberflächenschicht der Pellets beschränkt bleibt, so dass durch starkes Einfrieren der Oberflächenschicht eine hohe Rauigkeit an der Oberfläche durch Ausbildung einer Golfballstruktur erzielt werden kann, während andererseits die Pellets im Inneren über einen größeren Durchmesserbereich eine relativ konstante Temperatur behalten, die dann nach dem Trocknen die Nukleusbildung befördert.

Um die Pellets im ersten Nachbehandlungsschritt, der die Nukleusbildung ermöglichen und verstärken soll, gleichmäßig warmzuhalten und größere Temperaturverschiebungen bzw. Wärmeübergänge zu vermeiden, kann der erste Nachbehandlungsraum einen Vibrationsförderer umfassen, der die Pellets in leichter Bewegung hält, wobei die Pellets gleichzeitig mit dem gleichzeitig warmgehaltenen Gas beströmt werden, dessen Temperatur vorzugsweise in einem Bereich von 10° bis 40° oberhalb der Oberflächentemperatur der Pellets gehalten wird.

Beispielsweise kann das Gas im ersten Nachbehandlungsraum auf der genannten ersten Temperatur in einem Bereich von 130° bis 180° oder 140° bis 170° gehalten werden.

Um die Pellets im ersten Nachbehandlungsraum einer tatsächlich gleichmäßigen Gastemperatur aussetzen zu können, kann der genannte Vibrationsförderer von einer Einhausung umgeben sein, in die das temperierte Gas eingeblasen wird. Beispielsweise kann das Gas durch eine perforiert ausgebildete Auflagefläche des Vibrationsförderer auf die Pellets geblasen werden. Alternativ oder zusätzlich ist aber auch eine Umwälzung des temperierten Gases innerhalb der Einhausung und/oder ein Einblasen von temperiertem Gas durch die Einhausung möglich.

In dem genannten ersten Nachbehandlungsraum kann die Verweilzeit der Pellets zur Nukleusbildung relativ kurz sein, beispielsweise in einem Bereich von einigen wenigen Minuten. Vorzugsweise beträgt die Behandlungsdauer im ersten Nachbehandlungsraum etwa eine Viertelminute bis fünf Minuten oder eine Minute bis drei Minuten. Insbesondere kann eine Behandlungsdauer von einer Minute bis zwei Minuten vorgesehen sein.

Die Verwendung eines Vibrationsförderers ist dabei nicht nur vorteilhaft, um ein Zusammenbacken der noch nicht kristallisierten Pellets zu vermeiden, sondern es wird auch eine Vergleichmäßigung der Temperaturbeaufschlagung unterstützt, da die Pellets leicht in Bewegung gehalten werden und somit gleichmäßiger von dem temperierten Gas umströmt werden können.

Im zweiten Nachbehandlungsraum kann die Temperatur dann gegenüber dem ersten Nachbehandlungsraum mehr oder minder deutlich erhöht sein, beispielsweise um 10° bis 50° oder 20° bis 40° wärmer als die Temperatur des gleichmäßig warm temperierten Gases im ersten Nachbehandlungsraum gefahren werden.

Der zweite Nachbehandlungsraum kann eine vorzugsweise aktiv temperierte Raumwandung und/oder Auflagefläche für die Pellets besitzen, um einen Wärmeübergang zwischen den Pellets und der Behälter- bzw. Auflagewandung zu steuern und Wärmeverluste an den Pellets zu vermeiden, um eine gleichmäßige Wärmebehandlung zu erzielen.

In Weiterbildung der Erfindung kann der zweite Nachbehandlungsraum an seiner Raumwandung und/oder an der Auflagefläche für die Pellets auf eine Temperatur im Bereich von 160° bis 230° oder 180° bis 205° oder 190° bis 200° temperiert werden.

Alternativ oder zusätzlich zu einer Temperierung der Behälter- oder Auflagewandung kann in dem zweiten Nachbehandlungsraum auch eine Beaufschlagung der Pellets mit einem gleichmäßig warmgehaltenen Gas vorgesehen werden, welches vorzugsweise eine Temperatur im Bereich von 140° bis 220° haben kann.

Je nachdem, welche Nachbehandlung der Pellets erzielt bzw. im Vordergrund stehen soll, können die Temperaturen in dem zweiten Nachbehandlungsraum angepasst sein, beispielsweise derart, dass die Pellets für den Kristallisationsprozess eine Temperatur im Bereich von 140° bis 160° aufweisen. Für den Folgeprozess Dealdhydisierung und/oder Festkörperpolykondensation (SSP) kann die Wärmebehandlung im zweiten Behandlungsraum derart gefahren werden, dass die Raumwandung 160-195°C (Dealdehydisierung) oder 195-215°C (SSP) annehmen kann. Die Pellettemperatur im zweiten Nachbehandlungsraum wird gesteuert durch die extrem kurze Kontaktzeit der Pellets mit dem Prozesswasser, je kurzer die Kontaktzeit desto größer ist der heiße Kern und desto dünner die kältere gefrorene Pelletschicht, sodass nach dem Wärmeausgleich des Pellets die endgültige Pellettemperatur sich im zweiten Behandlunsraum einstellt.

Die Nachbehandlungsdauer in dem zweiten Nachbehandlungsraum beträgt vorzugsweise ein Vielfaches der Nachbehandlungsdauer im ersten Nachbehandlungsraum. Vorzugsweise können die Pellets im zweiten Nachbehandlungsraum mindestens fünf Mal länger oder mindestens zehn Mal länger als im ersten Nachbehandlungsraum nachbehandelt werden.

Beispielsweise können die Pellets in den temperierten und ggf. mit Gas beströmten Behältnis für die zweite Nachbehandlung über einen Zeitraum im Bereich von 15 bis 180 Minuten oder 60 bis 120 Minuten nachbehandelt werden.

Die Erfindung wird nachfolgend anhand eines bevorzugten Ausführungsbeispiels und zugehörigen Zeichnungen näher erläutert. In den Zeichnungen zeigen:
- Fig. 1:: eine Darstellung einer Vorrichtung zum Behandeln von PET-Polymeren zu PET-Pellets nach einer vorteilhaften Ausführung der Erfindung, wobei ein Unterwassergranulierer, ein nachgeschalteter Trockner und zwei dem Trockner nachgeordnete separate Nachbehandlungsräume dargestellt sind,
- Fig. 2:: eine perspektivische Darstellung des ersten Nachbehandlungsraums aus Fig. 1, der einen Vibrationsförderer mit einer Einhausung umfasst, durch die temperiertes Gas zirkuliert wird,
- Fig. 3:: eine perspektivische Darstellung des Vibrationsförderers aus Fig. 2 zusammen mit der daran angeschlossenen Heizluftanlage zum Zirkulieren von Heizluft bzw. -gas durch die Einhausung des Vibrationsförderers,
- Fig. 4:: eine Schnittansicht des temperierten Konditionierbehälters für den zweiten Nachbehandlungsraum, die die aktiv temperierbare Behälterwandung zeigt,
- Fig. 5:: eine perspektivische Explosionsdarstellung der Granulierkammer des Unterwassergranulierers aus Fig. 1, die die tangentialen Zu- und Abläufe für das Prozesswasser der Granulierkammer sowie die in der Granulierkammer angeordneten Strömungserzeuger in Form eines Pumpenrads zeigt,
- Fig. 6:: eine perspektivische Schnittansicht durch die vom Prozesswasser des Untergranulierers abgeschreckten Pellets, wobei die Temperaturverteilung in den Pellets für unterschiedliche Prozesswassertemperaturen und unterschiedliche Verweildauern dargestellt ist,
- Fig. 7:: eine Darstellung der sich bildenden Oberflächenstrukturen bei unterschiedlichen Prozesswassertemperaturen, und
- Fig. 8:: eine Darstellung der Nukleusbildung der an der Oberfläche eingefrorenen Pellets und die Auswirkung der Nukleusbildung auf die nachfolgende Kristallisierung.

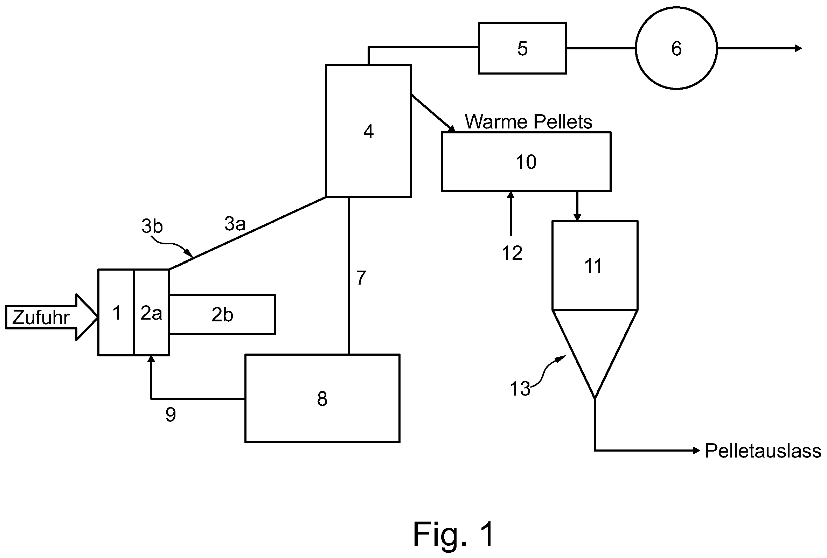

Wie Fig. 1 zeigt, umfasst die Vorrichtung zum Herstellen von PET-Pellets einen Unterwassergranulierer 2, in dessen Granulierkammer 2a über eine Lochplatte 1 Polymerschmelzestränge gelangen, die in der Granulierkammer 2a von einem rotierenden Messerkopf 2c, dessen Messer an der Lochplatte 1 entlangstreichen, zu Pellets granuliert werden.

Die Granulierkammer 2a wird dabei vom Prozesswasser durchströmt, das zusammen mit den granulierten Pellets über eine Abflussleitung 3a abgeführt und einem Trockner 4 zugeführt wird, in dem das Prozesswasser von den Pellets abgeschieden wird. Der genannte Trockner 4 kann beispielsweise ein Zentrifugaltrockner sein, bei dem rotierende Förderpaddel in einem stehenden, zylindrischen Sieb das Pellets-Prozesswasser-Gemisch nach oben fördern und dabei zentrifugieren. Das Prozesswasser wird über das Sieb ausgeschieden, während die Pellets aus dem Pelletauslass an einem oberen Endabschnitt des Trockners austreten können, um den Nachbehandlungsstationen zugeführt zu werden.

Das im Trockner 4 abgeschiedene Prozesswasser wird über einen Rückführleitung 7 einem Filtersystem 8 zugeführt, von dem aus das Prozesswasser über eine Zufuhrleitung 9 erneut der Granulierkammer 2a zugeführt wird, so dass sich ein Prozesswasserkreislauf ergibt.

Im Bereich des Wasserfilters 8 oder an anderer Stelle der Prozesswasserrückführung zwischen Trockner 4 und Granulierkammer 2a kann eine Temperiervorrichtung 14 vorgesehen sein, um das Prozesswasser mit der gewünschten Prozesswassertemperatur Tₚ der Granulierkammer 2a zuzuführen. Am Rande sei klargestellt, dass das Prozesswasser kein klares Wasser im Sinne von H₂O sein muss, sondern in an sich bekannter Weise Zusätze enthalten kann bzw. eine für Granulierer geeignete Flüssigkeit sein kann.

Die Abschreckung der Pellets im Prozesswasser wird einerseits durch die Prozesswassertemperatur und andererseits durch die Verweilzeit der Pellets im Prozesswasser von der Granulierkammer 2a bis zum Trockner 4 bestimmt, wobei in der eingangs schon erläuterten Weise das Prozesswasser zur Erzeugung einer golfballartigen Oberflächenstruktur an den Pellets mit einer Prozesswassertemperatur Tₚ im Bereich von 40° bis 80° oder 45° bis 75° oder 50° bis 70° der Granulierkammer 2a zugeführt wird.

Die Zirkulationsgeschwindigkeit des Prozesswassers durch die Granulierkammer 2a und die Abflussleitung 3a wird durch entsprechende Fördermengen bzw. Abstimmung der Fördermenge auf den Rohrquerschnitt der Abflussleitung 3a derart hoch gewählt, dass die Pellets eine Verweilzeit im Prozesswasser von weniger als einer Sekunde oder auch weniger als 0,5 Sekunden oder weniger als 0,3 Sekunden erfahren. Insbesondere kann die Verweilzeit im Prozesswasser auch weniger als 0,1 Sekunden betragen.

Um solche kurzen Verweilzeiten zu erreichen, kann einerseits die Länge der Abflussleitung 3a ausreichend kurz, beispielsweise weniger als 3 Meter oder weniger als einen Meter oder auch weniger als ein halber Meter gewählt werden und die genannte Abflussleitung 3a möglichst gerade, beispielsweise mit keiner oder nur einer Abkröpfung ausgebildet werden.

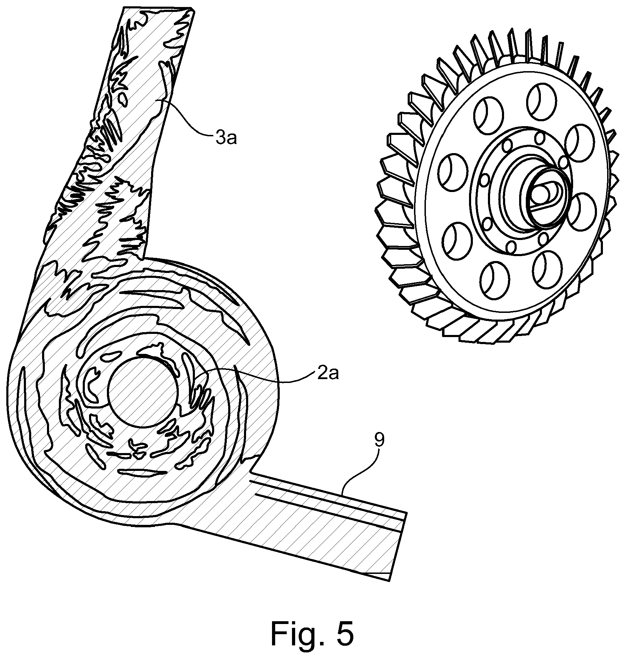

Alternativ oder zusätzlich kann eine kurze Verweilzeit auch durch Maßnahmen im Bereich der Granulierkammer 2a unterstützt werden. Wie Fig. 5 zeigt, kann die Zuleitung 9 für das Prozesswasser in die Granulierkammer 2a und auch die Abflussleitung 3a zum Ableiten des Prozesswasser-Pellet-Gemisches tangential zum Umfangsbereich der insgesamt etwa zylindrischen Granulierkammer angeordnet sein, wobei die Zuleitung 9 und die Abflussleitung 3 mit der Granulierkammer 2a in benachbarten Sektoren angeordnet sein können, so dass sich die Umfangsstrecke von der Öffnung der Zuleitung 9 in die Granulierkammer 2a bis zur Öffnung der Granulierkammer 2a in die Abflussleitung 3a weniger als 120°, beispielsweise etwa 90° betragen kann, vgl. Fig. 5.

Alternativ oder zusätzlich zu einer solchen tangentialen Anordnung der Zu- und Ableitungen kann auch im Inneren der Granulierkammer 2a ein die Strömungsverhältnisse des Prozesswassers beeinflussender Strömungserzeuger in Form eines Pumpenrads vorgesehen sein, um das Prozesswasser schnell durch die Granulierkammer zu fördern.

Ein solches Pumpenrad kann dabei an dem Messerkopf zum Granulieren der Schmelzestränge vorgesehen oder daran ausgebildet sein, beispielsweise in Form von Pumpenradschaufeln, die beispielsweise umfangsseitig am Messerkopf vorgesehen sein können, vgl. Fig. 5.

Um auch bei stark unterkühltem Prozesswasser keinen übermäßigen Wärmeentzug aus den Pellets heraus zu erzeugen, kann vorteilhafterweise der Abflussleitung 3 ein Gasinjektor 3b zugeordnet sein, um mit hoher Geschwindigkeit und/oder hohem Druck ein vorzugsweise reaktionsträges Gas, insbesondere Inertgas in die Abflussleitung 3a einzuspritzen, vorzugsweise an einem stromaufseitigen Ende der Abflussleitung 3a. Das sich hierdurch in der Abflussleitung 3a bildende Prozesswasser-GasGemisch, welches zusätzlich auch noch die Pellets enthält, reduziert den Wärmeentzug aus den Pellets heraus stark.

Wie Fig. 1 zeigt, werden aus dem Trockner 4 einerseits das abgeschiedene Prozesswasser und andererseits die immer noch warmen Pellets abgeleitet. Zusätzlich kann am oberen Ende des Trockners 4 ein Dampf- bzw. Nebelabfluss vorgesehen sein, um den Prozesswasserdampf bzw. -nebel einem Abscheider 5 bzw. Kondensator zuzuführen und ggf. anschließend durch einen Trockner bzw. Lüfter 6 zu führen.

Wie Fig. 1 zeigt, werden die aus dem Trockner 4 kommenden, getrockneten, immer noch warmen Pellets einem zweistufigen Nachbehandlungsprozess zugeführt, der zwei separate und voneinander unterschiedlich ausgebildete Nachbehandlungsräume 10 und 11 umfasst.

In dem ersten Nachbehandlungsraum 10 werden die Pellets bei nur sanft erhöhter Temperatur relativ kurz nachbehandelt, um die Nukleusbildung zu fördern, wobei die Pellets bei gleichmäßig warmgehaltener Umgebungsluft einer ersten Temperatur behandelt werden, die ein Stück weit oberhalb der Oberflächentemperatur der Pellets liegt. Die Gastemperatur T1 im ersten Nachbehandlungsraum 10 kann im Bereich von 130° bis 180° oder 140° bis 170° gefahren werden. Kommen die Pellets mit einer Oberflächentemperatur von 100° bis 140° oder 110° bis 130° oder etwa 120° in den genannten Nachbehandlungsraum 10, kann die Temperatur T1 der Raumluft des Nachbehandlungsraums 10 etwa 20° bis 40° oberhalb der genannten Oberflächentemperatur der Pellets gefahren werden.

Vorteilhafterweise können die Pellets im ersten Nachbehandlungsraum 10 über eine Zeitspanne t1 im Bereich von 15 bis 140 Sekunden, beispielsweise ein bis zwei Minuten behandelt werden.

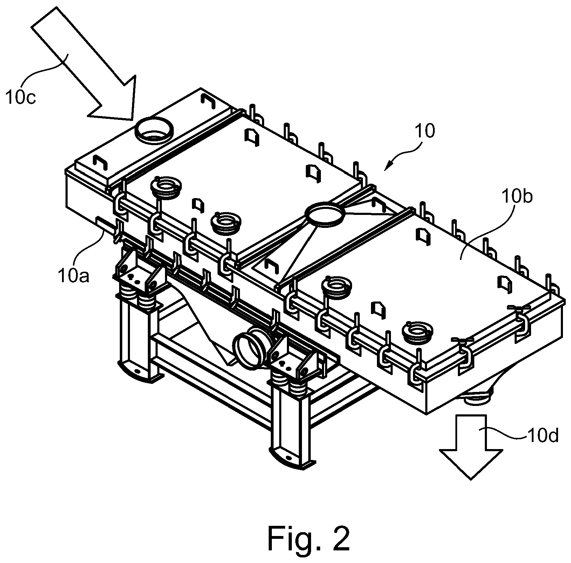

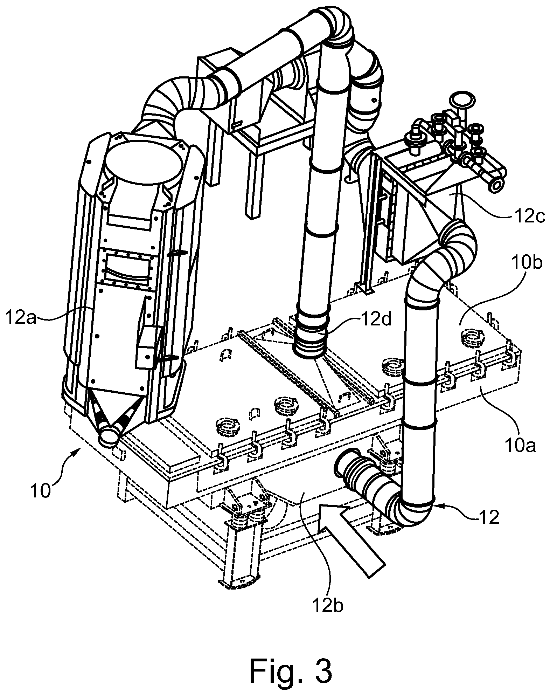

Wie Fig. 2 und Fig. 3 zeigen, kann der erste Nachbehandlungsraum 10 einen Vibrationsförderer beispielsweise in Form einer Schwingförderrinne mit einem Vibrationsantrieb umfassen, um die Pellets kontinuierlich durch den ersten Nachbehandlungsraum 10 zu fördern.

Der Vibrationsförderer 10a kann eine Einhausung 10b umfassen, um eine gleichmäßige Raumlufttemperatur um die Pellets herum sicherstellen zu können, wobei durch die Einhausung 10b Warmluft und/oder -gas von einer Warmluftvorrichtung 12 her zugeführt werden kann, vgl. Fig. 1.

Wie Fig. 3 zeigt, kann die Warmluft der Warmluftvorrichtung 13 beispielsweise durch die perforierte Auflagefläche des Vibrationsförderers 10a hindurch zugeführt werden, um beispielsweise von unten durch die Auflagefläche hindurch auf die dort befindlichen Pellets geleitet zu werden, so dass die Pellets sozusagen von der Warmluft umspült werden. An einer Decke der Einhausung 10b kann die Warmluft aus der Einhausung 10b wieder entweichen und einem Trockner 12a zugeführt werden, um dann über einen Wärmetauscher 12b temperiert zu werden, um dann erneut die Pellets im ersten Nachbehandlungsraum 10, insbesondere innerhalb der Einhausung 10b zu beströmen.

Wie ein Vergleich der Figuren 2 und 3 zeigt, können die Pellets über eine Pellet-Zufuhr 10c an einem Ende des Vibrationsförderers 10a zugeführt und am gegenüberliegenden Ende über eine Pellet-Abfuhr 10d abgeführt werden, während die Warmluft quer zur Förderrichtung der Pellets über die Pellets geführt wird. Insbesondere kann die Warmluftzufuhr 12 von einer Unterseite des Vibrationsförderers 10a her zugeführt werden, vorzugsweise zentral und/oder verteilt über einen Warmluftverteiler 12b. Nachdem die Warmluft den Vibrationsförderer 10a umströmt und/oder durchströmt hat, kann die Warmluft an einer Oberseite der Einhausung 10b über eine Abluftöffnung 12d abgeführt und in der genannten Weise im Kreislauf zurückgeführt werden.

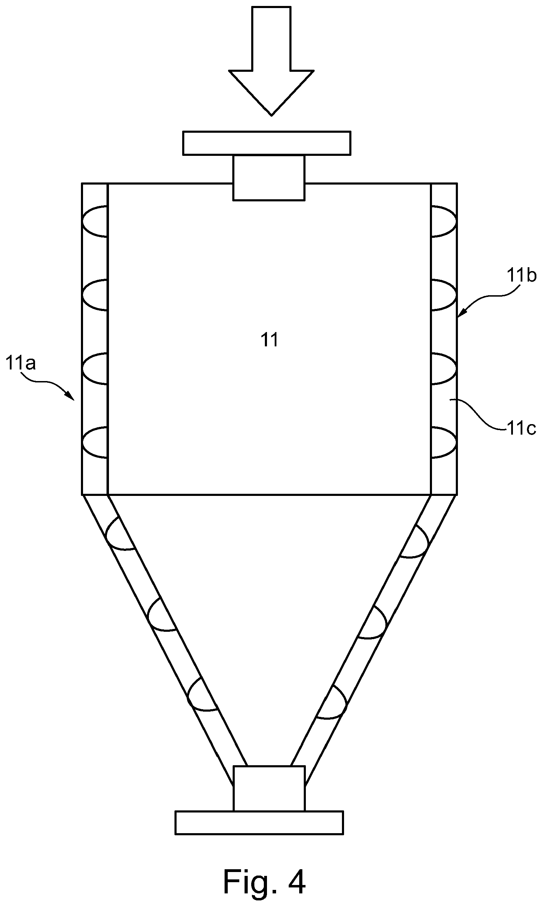

Nach der erfolgten Behandlung im ersten Nachbehandlungsraum 10 werden die Pellets dem zweiten Nachbehandlungsraum 11 zugeführt, der einen Konditionierbehälter 11a umfassen kann, vgl. Fig. 4, in dem die Pellets über eine längere zweite Zeitspanne t2 von einer Viertelstunde bis zwei Stunden oder ein bis zwei Stunden bei erhöhter Temperatur behandelt werden, vorzugsweise bei einer Temperatur im Bereich von 160° bis 230° oder 180° bis 205° oder 190° bis 200°.

Der genannte Konditionierbehälter 11a kann hierfür eine beheiz- und/oder kühlbare Behälterwandung 11b aufweisen, die über eine Temperiervorrichtung 11c aktiv temperiert werden kann, vorzugsweise auf eine Temperatur im Bereich von 180° bis 205°. Die Temperiervorrichtung 11c kann beispielsweise elektrische Heiz- und/oder Kühlelemente beispielsweise in Form von Peltierelementen umfassen. Alternativ oder zusätzlich kann die Behälterwandung auch über eine Flüssig- und/oder Gastemperiervorrichtung beheizt und/oder gekühlt werden, beispielsweise mittels Temperierflüssigkeit und/oder Temperiergas bzw. -luft, das bzw. die die Behälterwandung durchströmen und/oder umströmen kann.

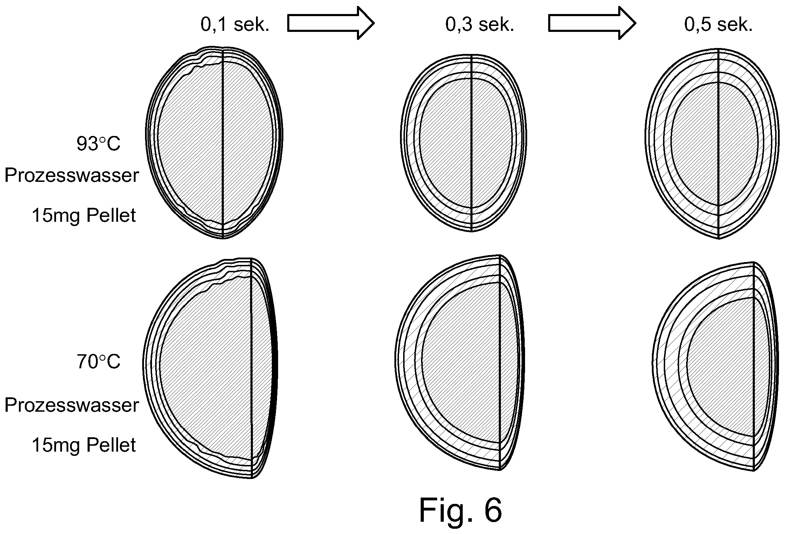

Wie Fig. 6 zeigt, kann durch das Abschrecken der Pellets durch das unterkühlte Prozesswasser bei nur kurzer Verweildauer eine relativ gleichmäßige Kerntemperatur bis nahe an die Oberflächenschicht der Pellets erhalten bleiben, während die Oberflächenschicht selbst eine starke, golfballartige, raue Oberflächenstrukturierung erfährt. Betrachtet man beispielsweise die untere Darstellungsreihe der Fig. 6, ist ersichtlich, dass bei einem Verkürzen der Verweilzeit von beispielsweise 0,5 Sekunden auf 0,1 Sekunden der Übergangsbereich zwischen dem heißen Pelletkern und der eingefrorenen Oberflächenhaut der Pellets deutlich verkleinert werden kann, d.h. der warme Pelletkern erstreckt sich deutlich weiter bis in die äußeren Schichten des Pellets hinein.

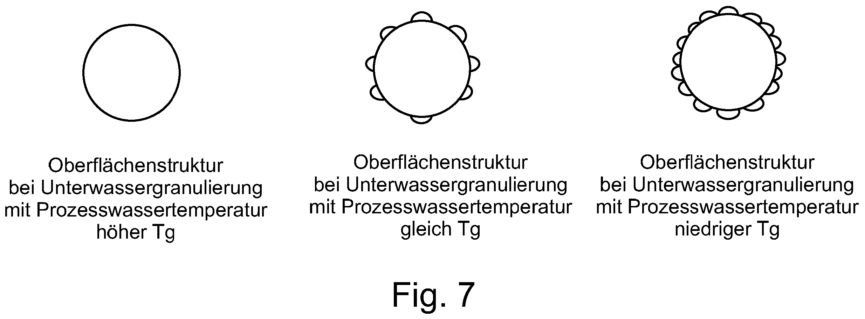

Fig. 7 verdeutlicht dabei den Effekt einer stärkeren Unterkühlung des Prozesswassers auf die Oberflächenstruktur. Je stärker das Prozesswasser unter die Glasübergangstemperatur T_{g} des Polymers abgekühlt wird, desto stärker bildet sich eine golfballartige Oberflächenstruktur aus. Während sich bei Prozesswassertemperaturen oberhalb der Glasübergangstemperatur T_{g}, vgl. Fig. 7 links, gar keine Oberflächenstrukturierung ausbildet, kann bei Prozesswassertemperatur auf dem Niveau der Glasüberganstemperatur eine leichte Oberflächenstruktur erzielt werden, vgl. Fig. 7 Mitte. Eine starke Oberflächenstrukturierung ergibt sich dann durch eine deutliche Unterkühlung unter die Glasübergangstemperatur, vgl. Fig. 7 rechts. Je stärker die Unterkühlung, desto stärker bildet sich die golfballartige Oberflächenstruktur aus.

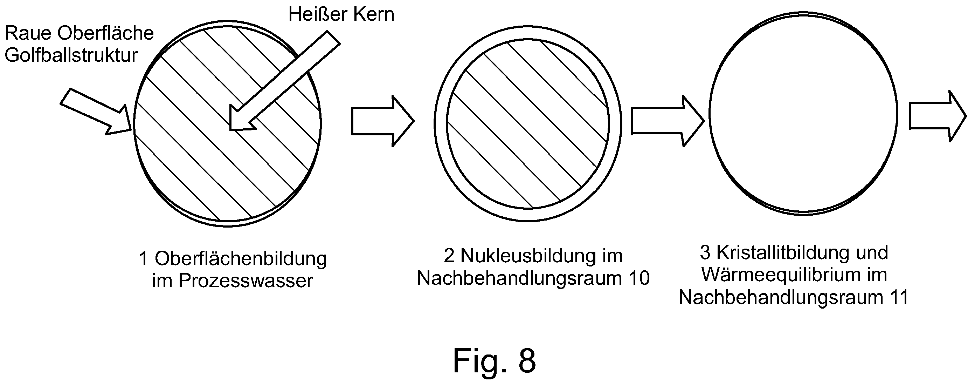

Fig. 8 verdeutlicht die Nukleusbildung in den solchermaßen vorbehandelten Pellets. Kommt das an der Oberfläche stark eingefrorene Pellet nach sehr kurzer Verweilzeit im Prozesswasser in den ersten Nachbehandlungsraum 10, kann sich ein großer Nukleus ausbilden, vgl. Fig. 8 links und Mitte. Bei einer solchermaßen starken Nukleusbildung kann die dann erfolgende Kristallitbildung effektiv erfolgen, so dass Pellets mit hohem Kristallitgehalt gleichmäßig über das Pellet verteilt erzeugt werden kann, vgl. Fig. 8 rechts.

## Patentansprüche

1. Verfahren zum Verarbeiten von PET-Polymeren zu PET-Pellets, bei dem PET-Schmelze in einem Unterwassergranulierer (2) zu PET-Pellets zerteilt wird, die im Gemisch mit Prozesswasser über eine Abflussleitung (3) vom Unterwassergranulierer (2) einem Trockner (4) zugeführt und vom Trockner (4) an eine Nachbehandlungsstation gegeben werden, wobei das Prozesswasser zum Erzeugen einer golfballartigen Oberflächenstruktur an den PET-Pellets auf einer Temperatur (Tₚ) unter der Glasübergangstemperatur (T_{g}) des verwendeten PET-Polymers gehalten wird, **dadurch gekennzeichnet, dass** die Pellets binnen einer Sekunde oder weniger vom Prozesswasser getrennt und nach dem Trockner (4) in einem zumindest zweistufigen Nachbehandlungsprozess nachbehandelt werden, bei dem die Pellets zunächst in einem ersten Nachbehandlungsraum (10) zur Nukleusbildung mit gleichmäßig warm gehaltenem Gas einer ersten Temperatur (T1), die höher als die Oberflächentemperatur der Pellets ist, für eine erste Zeitspanne (t1) beaufschlagt werden, sowie in einem zweiten Nachbehandlungsraum (11) zur Kristallisation und/oder Dealdehydisierung und/oder Festkörperpolykondensation mit einer zweiten Temperatur (T2), die höher als die erste Temperatur (T1) ist, über eine zweite Zeitspanne t2, die ein Vielfaches der ersten Zeitdauer t1 beträgt, nachbehandelt wird.

2. Verfahren nach dem vorhergehenden Anspruch, wobei die Pellets binnen weniger als 0,5 Sekunden oder weniger als 0,3 Sekunden oder weniger als 0,1 Sekunden von der Granulierkammer (2a) des Unterwassergranulierers (2) über die Abflussleitung (3) in den Trockner (4) befördert werden.

3. Verfahren nach dem vorhergehenden Anspruch, wobei in die Abflussleitung (3), insbesondere in einen stromaufseitigen Endabschnitt der Abflussleitung (3) unmittelbar nach der Granulierkammer (2a), Druckluft und/oder -gas zum Erzeugen eines Luft/Gas-Prozesswasser-Pellet-Gemischs in der Abflussleitung (3) eingespritzt wird.

4. Verfahren nach einem der vorhergehenden Ansprüche, wobei das Prozesswasser der zumindest näherungsweise zylindrischen Granulierkammer (2a) des Unterwassergranulierers (2) in zumindest näherungsweise tangentialer Richtung zugeführt und in zumindest näherungsweise tangentialer Richtung aus der Granulierkammer (2a) in die Abflussleitung (3) abgeführt wird, wobei das Prozesswasser in der Granulierkammer (2a) mittels eines Pumpenrads, insbesondere eines als Pumpenrad ausgebildeten Messerkopfs, in Turbulenz versetzt und mit den Pellets gemischt wird.

5. Verfahren nach einem der vorhergehenden Ansprüche, wobei das Prozesswasser in der Granulierkammer (2) des Unterwassergranulierers (2) auf einer Temperatur (Tₚ) im Bereich von 40° bis 80° oder 45° bis 75° oder 50° bis 70° gehalten wird.

6. Verfahren nach einem der vorhergehenden Ansprüche, wobei die Pellets in dem ersten Nachbehandlungsraum (10) von einem Vibrationsförderer in Bewegung gehalten und mit dem gleichmäßig warmgehaltenen Gas beströmt werden, wobei das Gas auf der genannten ersten Temperatur (T1) im Bereich von 20° bis 40° oberhalb der Oberflächentemperatur der Pellets gehalten wird, wobei das gleichmäßig warmgehaltene Gas im ersten Nachbehandlungsraum (10) auf der genannten ersten Temperatur im Bereich von 130° bis 180° oder 140° bis 170° gehalten wird, wobei die Pellets in dem genannten ersten Nachbehandlungsraum (10) für die genannte erste Zeitspanne (t1) im Bereich von einer Viertelminute bis 5 Minuten oder einer Minute bis 3 Minuten oder einer Minute bis zwei Minuten behandelt wird.

7. Verfahren nach einem der vorhergehenden Ansprüche, wobei die Temperatur (T2) im zweiten Nachbehandlungsraum (11) um 10° bis 50° oder 20° bis 40° wärmer als die Temperatur (T1) des gleichmäßig warm temperierten Gases im ersten Nachbehandlungsraum gehalten wird.

8. Verfahren nach einem der vorhergehenden Ansprüche, wobei der zweite Nachbehandlungsraum (11) eine temperierte Raumwandung und/oder eine temperierte Auflagefläche für die Pellets besitzt, wobei die Raumwandung und/oder Auflagefläche für die Pellets auf der genannten Temperatur T2 im Bereich von 160° bis 230° oder 180° bis 205° oder 190° bis 200° gehalten wird.

9. Verfahren nach einem der vorhergehenden Ansprüche, wobei die Pellets in dem zweiten Nachbehandlungsraum (11) mit gleichmäßig warmgehaltenem Gas beströmt werden, vorzugsweise mit einer Temperatur von 140° bis 220°.

10. Verfahren nach einem der vorhergehenden Ansprüche, wobei die Pellets in dem zweiten Nachbehandlungsraum (11) mindestens 5 Mal länger oder mindestens 10 Mal länger als im ersten Nachbehandlungsraum (10) nachbehandelt werden.

11. Verfahren nach einem der vorhergehenden Ansprüche, wobei die Pellets in dem zweiten Nachbehandlungsraum (11) für die genannte Zeitspanne t2 im Bereich von 15 bis 180 Minuten oder 60 bis 120 Minuten nachbehandelt werden.

12. Vorrichtung zum Verarbeiten von PET-Polymeren zu PET-Pellets, mit einem Unterwassergranulierer (2) zum Unterwassergranulieren von PET-Schmelze zu PET-Pellets, einem dem Unterwassergranulierer (2) nachgeordneten Trockner (4), der über eine Abflussleitung (3) mit dem Unterwassergranulierer (2) verbunden ist und vom Unterwassergranulierer (2) ein Pellet-Prozesswasser-Gemisch erhält, sowie einer Nachbehandlungsstation zum Nachbehandeln der im Trockner (4) getrockneten Pellets, wobei der genannte Unterwassergranulierer (2) eine Temperiervorrichtung zum Temperieren des Prozesswasser auf eine Temperatur (Tₚ) unter der Glasübergangstemperatur (T_{g}) des verwendeten PET-Polymers besitzt, **dadurch gekennzeichnet, dass** der Unterwassergranulierer (2) und die Abflussleitung (3) dazu ausgebildet sind, die Pellets binnen einer Sekunde oder weniger in den Trockner (4) zu befördern und die Pellets vom Prozesswasser zu trennen, wobei die Nachbehandlungsstation zumindest zwei separate und unterschiedlich ausgebildete Nachbehandlungsräume (10, 11) umfasst, von denen ein erster Nachbehandlungsraum (10) zur Nukleusbildung eine Gastemperiervorrichtung zum Beaufschlagen der Pellets mit einem gleichmäßig warmgehaltenen Gas einer ersten Temperatur (T1), die höher als die Oberflächentemperatur der Pellets ist, für eine erste Zeitspanne t1 aufweist, sowie der zweite Nachbehandlungsraum (11) zur Kristallisation der Pellets eine Temperiervorrichtung zum Temperieren einer Raumwandung und/oder einer Auflagefläche für die Pellets auf eine Temperatur (T2), die größer ist als die genannte Temperatur (T1) des Gases im ersten Nachbehandlungsraum (10), für eine zweite Zeitdauer (t2), die ein Vielfaches der ersten Zeitdauer (t1) beträgt, aufweist.

13. Vorrichtung nach dem vorhergehenden Anspruch, wobei der erste Nachbehandlungsraum (10) einen Vibrationsförderer (10a) zum in Bewegung Halten der Pellets aufweist.

14. Vorrichtung nach dem vorhergehenden Anspruch, wobei der Vibrationsförderer (10a) des ersten Nachbehandlungsraums (10) von einer Einhausung (10b) umgeben ist, innerhalb derer die Pellets auf dem Vibrationsförderer (10a) mit dem gleichmäßig warmgehaltenen Gas beaufschlagbar sind.

15. Vorrichtung nach einem der vorhergehenden Ansprüche 12 bis14, wobei der zweite Nachbehandlungsraum (11) einen Konditionierbehälter (11a) mit temperierter Behälterwandung (11b) umfasst, wobei eine Temperiervorrichtung zum Temperieren der Behälterwandung dazu ausgebildet ist, die Behälterwandung auf einer Temperatur im Bereich von 180° bis 205°C zu halten.

## Claims

1. A method for processing PET polymers to form PET pellets, in which PET melt is divided into PET pellets in an underwater pelletizer (2), which are supplied in a mixture with process water via a discharge line (3) from the underwater pelletizer (2) to a dryer (4) and are discharged from the dryer (4) to a post-treatment station, wherein the process water is kept at a temperature (Tₚ) below the glass transition temperature (T_{g}) of the PET polymer used in order to produce a golf ball-like surface structure on the PET pellets,
**characterized in that** the pellets are separated from the process water within one second or less and are aftertreated after the dryer (4) in an at least two-stage aftertreatment process, in which the pellets are first supplied in a first post-treatment chamber (10) for nucleus formation with gas kept uniformly hot at a first temperature (T1), which is higher than the surface temperature of the pellets, for a first time period (t1), and are aftertreated in a second post-treatment chamber (11) for crystallization and/or dealdehydization and/or solid-state polycondensation at a second temperature (T2), which is higher than the first temperature (T1), over a second time period t2, which is a multiple of the first time period t1.

2. The method according to the preceding claim, wherein the pellets are conveyed from the pelletizing chamber (2a) of the underwater pelletizer (2) via the discharge line (3) into the dryer (4) within less than 0.5 seconds or less than 0.3 seconds or less than 0.1 seconds.

3. The method according to the preceding claim, wherein compressed air and/or compressed gas is injected into the discharge line (3), in particular into an upstream end portion of the discharge line (3) immediately after the pelletizing chamber (2a), to produce an air/gas-process water-pellet mixture in the discharge line (3).

4. The method according to any one of the preceding claims, wherein the process water is supplied to the at least approximately cylindrical pelletizing chamber (2a) of the underwater pelletizer (2) in an at least approximately tangential direction and is discharged from the pelletizing chamber (2a) into the discharge line (3) in an at least approximately tangential direction, wherein the process water in the pelletizing chamber (2a) is brought into turbulence by means of a pump wheel, in particular a cutter head designed as a pump wheel, and is mixed with the pellets.

5. The method according to any one of the preceding claims, wherein the process water in the pelletizing chamber (2) of the underwater pelletizer (2) is kept at a temperature (Tₚ) in the range of 40° to 80° or 45° to 75° or 50° to 70°.

6. The method according to any one of the preceding claims, wherein the pellets in the first post-treatment chamber (10) are kept in motion by a vibratory conveyor and are flowed with the gas kept uniformly hot, wherein the gas is kept at said first temperature (T1) in the range of 20° to 40° above the surface temperature of the pellets, wherein the gas kept uniformly hot in the first post-treatment chamber (10) is kept at said first temperature in the range of 130° to 180° or 140° to 170°, wherein the pellets are treated in said first post-treatment chamber (10) for said first time period (t1) in the range of a quarter of a minute to 5 minutes or one minute to 3 minutes or one minute to two minutes.

7. The method according to any one of the preceding claims, wherein the temperature (T2) in the second post-treatment chamber (11) is kept 10° to 50° or 20° to 40° warmer than the temperature (T1) of the uniformly hot tempered gas in the first post-treatment chamber.

8. The method according to any one of the preceding claims, wherein the second post-treatment chamber (11) has a temperature-controlled chamber wall and/or a temperature-controlled support surface for the pellets, wherein the chamber wall and/or support surface for the pellets is kept at said temperature T2 in the range of 160° to 230° or 180° to 205° or 190° to 200°.

9. The method according to any one of the preceding claims, wherein the pellets in the second post-treatment chamber (11) are flowed with gas kept uniformly hot, preferably at a temperature of 140° to 220°.

10. The method according to any one of the preceding claims, wherein the pellets are aftertreated in the second post-treatment chamber (11) at least 5 times longer or at least 10 times longer than in the first post-treatment chamber (10).

11. The method according to any one of the preceding claims, wherein the pellets are aftertreated in the second post-treatment chamber (11) for said time period t2 in the range of 15 to 180 minutes or 60 to 120 minutes.

12. An apparatus for processing PET polymers to form PET pellets, comprising an underwater pelletizer (2) for underwater pelletizing of PET melt into PET pellets, a dryer (4) downstream of the underwater pelletizer (2), which is connected via a discharge line (3) to the underwater pelletizer (2) and receives a pellet-process water mixture from the underwater pelletizer (2), and a post-treatment station for post-treating the pellets dried in the dryer (4), wherein said underwater pelletizer (2) has a tempering device for tempering the process water to a temperature (Tₚ) below the glass transition temperature (T_{g}) of the PET polymer used, **characterized in that** the underwater pelletizer (2) and the discharge line (3) are configured to convey the pellets into the dryer (4) within one second or less and to separate the pellets from the process water, wherein the post-treatment station comprises at least two separate and differently configured post-treatment chambers (10, 11), of which a first post-treatment chamber (10) for nucleus formation comprises a gas tempering device for supplying the pellets with a gas kept uniformly hot at a first temperature (T1), which is higher than the surface temperature of the pellets, for a first time period t1, and the second post-treatment chamber (11) for crystallization of the pellets comprises a tempering device for tempering a chamber wall and/or a support surface for the pellets to a temperature (T2), which is greater than said temperature (T1) of the gas in the first post-treatment chamber (10), for a second time period (t2), which is a multiple of the first time period (t1).

13. The apparatus according to the preceding claim, wherein the first post-treatment chamber (10) comprises a vibratory conveyor (10a) for keeping the pellets in motion.

14. The apparatus according to the preceding claim, wherein the vibratory conveyor (10a) of the first post-treatment chamber (10) is surrounded by an enclosure (10b), within which the pellets on the vibratory conveyor (10a) can be supplied with the gas kept uniformly hot.

15. The apparatus according to any one of claims 12 to 14, wherein the second post-treatment chamber (11) comprises a conditioning container (11a) with a temperature-controlled container wall (11b), wherein a tempering device for tempering the container wall is configured to keep the container wall at a temperature in the range of 180° to 205°C.

## Revendications

1. Procédé pour traiter des polymères de PET en granulés de PET, dans lequel de la masse fondue de PET est divisée en granulés de PET dans un granulateur sous eau (2), lesquels sont amenés dans un mélange avec de l'eau de procédé via une conduite d'évacuation (3) depuis le granulateur sous eau (2) à un sécheur (4) et sont déchargés du sécheur (4) vers une station de post-traitement, dans lequel l'eau de procédé est maintenue à une température (Tₚ) inférieure à la température de transition vitreuse (T_{g}) du polymère de PET utilisé afin de produire une structure de surface de type balle de golf sur les granulés de PET,caractérisé en ce queles granulés sont séparés de l'eau de procédé en une seconde ou moins et sont post-traités après le sécheur (4) dans un processus de post-traitement à au moins deux étages, dans lequel les granulés sont d'abord alimentés, dans une première chambre de post-traitement (10) pour la formation de noyaux, en un gaz maintenu uniformément chaud à une première température (T1), qui est supérieure à la température de surface des granulés, pendant une première durée (t1), et est post-traité dans une deuxième chambre de post-traitement (11) pour la cristallisation et/ou la déaldéhydisation et/ou la polycondensation à l'état solide à une deuxième température (T2), qui est supérieure à la première température (T1), sur une deuxième durée t2, qui est un multiple de la première durée t1.

2. Procédé selon la revendication précédente, dans lequel les granulés sont transportés en moins de 0,5 seconde ou moins de 0,3 seconde ou moins de 0,1 seconde de la chambre de granulation (2a) du granulateur sous eau (2) via la conduite d'évacuation (3) dans le sécheur (4).

3. Procédé selon la revendication précédente, dans lequel de l'air comprimé et/ou du gaz comprimé est injecté dans la conduite d'évacuation (3), en particulier dans une section d'extrémité amont de la conduite d'évacuation (3) immédiatement après la chambre de granulation (2a), pour produire un mélange air/gaz-eau de procédé-granulés dans la conduite d'évacuation (3).

4. Procédé selon l'une quelconque des revendications précédentes, dans lequel l'eau de procédé est amenée à la chambre de granulation (2a) au moins approximativement cylindrique du granulateur sous eau (2) dans une direction au moins approximativement tangentielle et est évacuée de la chambre de granulation (2a) dans la conduite d'évacuation (3) dans une direction au moins approximativement tangentielle, dans lequel l'eau de procédé dans la chambre de granulation (2a) est mise en turbulence au moyen d'une roue de pompe, en particulier d'une tête de coupe conçue comme une roue de pompe, et est mélangée avec les granulés.

5. Procédé selon l'une quelconque des revendications précédentes, dans lequel l'eau de procédé dans la chambre de granulation (2) du granulateur sous eau (2) est maintenue à une température (Tₚ) dans la plage de 40° à 80° ou 45° à 75° ou 50° à 70°.

6. Procédé selon l'une quelconque des revendications précédentes, dans lequel les granulés dans la première chambre de post-traitement (10) sont maintenus en mouvement par un transporteur vibrant et sont balayés avec le gaz maintenu uniformément chaud, dans lequel le gaz est maintenu à ladite première température (T1) dans la plage de 20° à 40° au-dessus de la température de surface des granulés, dans lequel le gaz maintenu uniformément chaud dans la première chambre de post-traitement (10) est maintenu à ladite première température dans la plage de 130° à 180° ou 140° à 170°, dans lequel les granulés sont traités dans ladite première chambre de post-traitement (10) pendant ladite première durée (t1) dans la plage d'un quart de minute à 5 minutes ou d'une minute à 3 minutes ou d'une minute à deux minutes.

7. Procédé selon l'une quelconque des revendications précédentes, dans lequel la température (T2) dans la deuxième chambre de post-traitement (11) est maintenue de 10° à 50° ou de 20° à 40° plus chaude que la température (T1) du gaz tempéré uniformément chaud dans la première chambre de post-traitement.

8. Procédé selon l'une quelconque des revendications précédentes, dans lequel la deuxième chambre de post-traitement (11) possède une paroi de chambre thermorégulée et/ou une surface d'appui thermorégulée pour les granulés, dans lequel la paroi de chambre et/ou la surface d'appui pour les granulés est maintenue à ladite température T2 dans la plage de 160° à 230° ou 180° à 205° ou 190° à 200°.

9. Procédé selon l'une quelconque des revendications précédentes, dans lequel les granulés dans la deuxième chambre de post-traitement (11) sont balayés avec un gaz maintenu uniformément chaud, de préférence à une température de 140° à 220°.

10. Procédé selon l'une quelconque des revendications précédentes, dans lequel les granulés sont post-traités dans la deuxième chambre de post-traitement (11) au moins 5 fois plus longtemps ou au moins 10 fois plus longtemps que dans la première chambre de post-traitement (10).

11. Procédé selon l'une quelconque des revendications précédentes, dans lequel les granulés sont post-traités dans la deuxième chambre de post-traitement (11) pendant ladite durée t2 dans la plage de 15 à 180 minutes ou 60 à 120 minutes.

12. Dispositif pour traiter des polymères de PET en granulés de PET, comprenant un granulateur sous eau (2) pour la granulation sous eau de masse fondue de PET en granulés de PET, un sécheur (4) en aval du granulateur sous eau (2), qui est relié via une conduite d'évacuation (3) au granulateur sous eau (2) et reçoit du granulateur sous eau (2) un mélange granulés-eau de procédé, ainsi qu'une station de post-traitement pour post-traiter les granulés séchés dans le sécheur (4), dans lequel ledit granulateur sous eau (2) possède un dispositif de thermorégulation pour thermoréguler l'eau de procédé à une température (Tₚ) inférieure à la température de transition vitreuse (T_{g}) du polymère de PET utilisé,caractérisé en ce quele granulateur sous eau (2) et la conduite d'évacuation (3) sont configurés pour transporter les granulés en une seconde ou moins dans le sécheur (4) et pour séparer les granulés de l'eau de procédé, dans lequel la station de post-traitement comprend au moins deux chambres de post-traitement (10, 11) séparées et configurées différemment, dont une première chambre de post-traitement (10) pour la formation de noyaux comprend un dispositif de thermorégulation de gaz pour alimenter les granulés en un gaz maintenu uniformément chaud à une première température (T1), qui est supérieure à la température de surface des granulés, pendant une première durée t1, et la deuxième chambre de post-traitement (11) pour la cristallisation des granulés comprend un dispositif de thermorégulation pour thermoréguler une paroi de chambre et/ou une surface d'appui pour les granulés à une température (T2), qui est supérieure à ladite température (T1) du gaz dans la première chambre de post-traitement (10), pendant une deuxième durée (t2), qui est un multiple de la première durée (t1).

13. Dispositif selon la revendication précédente, dans lequel la première chambre de post-traitement (10) comprend un transporteur vibrant (10a) pour maintenir les granulés en mouvement.

14. Dispositif selon la revendication précédente, dans lequel le transporteur vibrant (10a) de la première chambre de post-traitement (10) est entouré par une enceinte (10b), à l'intérieur de laquelle les granulés sur le transporteur vibrant (10a) peuvent être alimentés en gaz maintenu uniformément chaud.

15. Dispositif selon l'une quelconque des revendications 12 à 14, dans lequel la deuxième chambre de post-traitement (11) comprend un récipient de conditionnement (11a) avec une paroi de récipient (11b) thermorégulée, dans lequel un dispositif de thermorégulation pour thermoréguler la paroi de récipient est configuré pour maintenir la paroi de récipient à une température dans la plage de 180° à 205°C.
